(19) Europäisches Patentamt
European Patent Office
Office européen des brevets

(11) EP 1 492 829 B1

(12) FASCICULE DE BREVET EUROPEEN

(45) Date de publication et mention de la délivrance du brevet:
**15.08.2007 Bulletin 2007/33**

(21) Numéro de dépôt: **03745812.2**

(22) Date de dépôt: **02.04.2003**

(51) Int Cl.:
***C08F 232/08*** *(2006.01)* ***C08F 212/32*** *(2006.01)*

(86) Numéro de dépôt international:
**PCT/FR2003/001026**

(87) Numéro de publication internationale:
**WO 2003/085014 (16.10.2003 Gazette 2003/42)**

# (54) MELANGES HYDROCARBONES COMPRENANT DES HYDROCARBURES AROMATIQUES POLYCYCLIQUES MODIFIES

KOHLENWASSERSTOFF MISCHUNGEN DIE MODIFIZIERTE POLYCYCLISCHE AROMATISCHE KOHLENWASSERSTOFFEN ENTHALTEN

HYDROCARBON MIXTURES COMPRISING MODIFIED POLYCYCLIC AROMATIC HYDROCARBONS

(84) Etats contractants désignés:
**AT BE BG CH CY CZ DE DK EE ES FI FR GB GR HU IE IT LI LU MC NL PT RO SE SI SK TR**

(30) Priorité: **09.04.2002 FR 0204393**

(43) Date de publication de la demande:
**05.01.2005 Bulletin 2005/01**

(73) Titulaire: **TotalFinaElf France**
**92800 Puteaux (FR)**

(72) Inventeurs:
- **LEMOINE, Guy**
  **F-76600 Le Havre (FR)**
- **YOUSSEF, Boulos**
  **F-76130 Mont Saint-Aignan (FR)**
- **BUNEL, Claude**
  **F-76420 Bihorel (FR)**
- **JOLIVET, Yannick**
  **F-76600 Le Havre (FR)**
- **PINOCHE, Jean-Marie**
  **F-76700 Gainneville (FR)**

(74) Mandataire: **Pöpping, Barbara et al**
**Cabinet Jolly,**
**54, rue de Clichy**
**75009 Paris (FR)**

(56) Documents cités:
**DE-A- 4 332 806**

Il est rappelé que: Dans un délai de neuf mois à compter de la date de publication de la mention de la délivrance du brevet européen, toute personne peut faire opposition au brevet européen délivré, auprès de l’Office européen des brevets. L’opposition doit être formée par écrit et motivée. Elle n’est réputée formée qu’après paiement de la taxe d’opposition. (Art. 99(1) Convention sur le brevet européen).

EP 1 492 829 B1

## Description

La présente invention concerne des mélanges hydrocarbonés issus de coupes pétrolières comprenant des hydrocarbures aromatiques polycycliques modifiés ou PAC modifiés. Elle concerne également des procédés d'obtention de ces mélanges hydrocarbonés et des utilisations de ces mélanges hydrocarbonés.

La présence de composés aromatiques dans les hydrocarbures issus de coupes pétrolières ou de leur raffinage est un problème majeur pour le raffineur. Certains composés aromatiques sont nécessaires à la bonne qualité du produit commercialisé, mais d'autres, tels les composés aromatiques polycycliques ou PAC, sont toxiques pour l'environnement et l'homme en particulier. En effet, les normes de toxicologie ont classé certains de ces composés aromatiques PAC parmi les produits présentant un éventuel danger cancérigène.

On entend par PAC, dans la suite de la présente description, l'ensemble des composés aromatiques polycycliques, y compris ceux comprenant dans leur structure chimique des hétéroatomes tels que le soufre, l'azote et l'oxygène. Parmi ces PAC, on trouve des composés dits HAP ou hydrocarbures aromatiques polycycliques condensés purs, dont certains apparaissent dans des listes de produits reconnus comme étant des produits cancérigènes et/ou mutagènes.

Ainsi, certaines coupes pétrolières contenant certains de ces HAP ont-elles été classées-Cancérigènes Cat2 (substances cancérigènes chez l'animal).

Un des grands soucis des raffineurs est donc de limiter, voire supprimer, ces composés PAC des produits vendus sur le marché, quelle que soit leur utilisation ultérieure.

De multiples procédés ont été étudiés pour réduire la teneur en PAC de ces coupes pétrolières, en vue de réduire leur pouvoir cancérigène.

Parmi ces procédés, beaucoup visent à extraire ou convertir les dérivés du dibenzothiophène, les dérivés du carbazole et les hydrocarbures aromatiques polycycliques condensés (HAP). Les voies explorées sont l'hydrogénation catalytique, l'oxydésulfuration ou encore l'extraction de ces composés par formation de complexes à transfert de charge.

Si tous ces procédés présentent un intérêt pour le raffineur, les procédés mis en oeuvre ne sont pas efficaces à 100% sur toutes les coupes hydrocarbonées et se traduisent souvent par une perte de matières, car les produits indésirables sont extraits avant d'être traités.

Dans le domaine du traitement des sables bitumineux, des goudrons et des résidus du charbon, les industriels ont choisi d'ajouter, dans les coupes et extraits séparés, des polymères du groupe constitué par le PVC, le butadiène-styrène, l'huile d'anthracène et de polystyrène et éventuellement du chlorure ferrique, puis de chauffer les mélanges ainsi obtenus pour diminuer leur teneur en benzo-pyrène de façon significative (voir DE 4138561, et les publications de Janusz Zielinsky dans Polymery-Tworzywa wielkoczasteczlowe, 1995, 40 (10), 591 et J. Am. Chem. Soc., Div. Fuel Chem. (1995), 40 (4), 768-770).

Dans le brevet JP 05271117, on décrit la purification de coupes aromatiques naphténiques extraites du goudron de houille contenant des hydrocarbures aromatiques polycycliques soufrés, notamment des dibenzothiophènes. Dans ce procédé de purification, une première étape consiste à polymériser sur ces composés polycycliques soufrés une oléfine en présence d'un catalyseur acide, argile, alumine ou zéolithe, de préférence une zéolithe Y, à une température comprise entre 50 et 250°C. Dans une deuxième étape, les polymères ainsi formés sont ensuite extraits par distillation, une coupe aromatique purifiée étant ainsi obtenue.

Aucun des procédés proposés n'envisage le traitement d'un mélange de PAC dans un mélange d'hydrocarbures en tout ou en partie aromatiques.

Par ailleurs, dans le domaine de la polymérisation, il est connu d'utiliser les hydrocarbures aromatiques polycycliques ou PAC, pris individuellement, comme retardateurs de polymérisation. Ainsi, on peut utiliser individuellement, comme retardateur, le naphtalène, l'anthracène, le phénanthrène, ou les benzo-pyrènes. Cet effet retardateur dépend essentiellement de leur réactivité propre dans une réaction de polymérisation.

Dans le cadre de la présente invention, la Demanderesse vise à modifier en priorité les PAC qui sont présents en mélange avec d'autres composés aromatiques dans les coupes pétrolières et donc à mettre en oeuvre un procédé sélectif visant le blocage des sites chimiques les plus réactifs sur les molécules de PAC, tout en gardant aux PAC ainsi modifiés leur caractère aromatique. Ces sites, bien connus, sont les sites les plus réactifs chimiquement (J.L.Ihrig and S. Pal Sood dans Journal of polymer science, Part A, Vol. 3, 1573-1586 1965). Bien entendu, ce procédé sélectif peut modifier la structure chimique des hydrocarbures aromatiques non PAC initialement présents, sans que cela soit un but visé par l'invention.

La présente invention a donc pour premier objet un mélange hydrocarboné comprenant des composés aromatiques polycycliques modifiés ou PAC modifiés, caractérisé en ce que ces PAC modifiés présentent une structure chimique de masse molaire moyenne comprise entre 150 et 10 000, cette structure chimique étant représentée par la formule (I) ci-après :

$$(A)_x(PAC)_y \qquad (I)$$

dans laquelle x et y sont des nombres entiers correspondant respectivement aux nombres de motifs A et PAC choisis tels que x/y est supérieur ou égal à 1, de préférence compris entre 1 et 50,

et dans laquelle le motif A représente un monomère polymérisable ou un mélange de monomères, comprenant de 2 à 60 atomes de carbone.

On entend par PAC initiaux dans la suite de la présente description, les PAC initialement présents dans les mélanges hydrocarbonés avant l'ajout d'un ou plusieurs monomères A. Par PAC modifiés, on entend les composés de formule (I).

Dans la suite de la présente description, le motif A sera décrit en référence à la nature du monomère qui l'a engendré et sera appelé monomère A.

Dans un mode préféré de réalisation de l'invention, les PAC modifiés ont une masse molaire moyenne comprise entre 150 et 5000, et le rapport x/y est compris entre 1 et 20.

Les motifs A, dans la formule (I) selon la présente invention, correspondent de préférence à des monomères A de structure chimique répondant à la formule (II) ci-après :

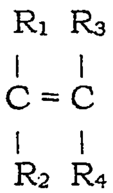

(II)

dans laquelle $R_1$, $R_2$, $R_3$ et $R_4$, sont identiques ou différents et choisis dans le groupe constitué par l'hydrogène, les groupes alkyle linéaires ou ramifiés, comprenant de 1 à 10 atomes de carbone, substitués ou non par des atomes d'halogène, des cycles aromatiques ou non et/ou des groupements acétate alkyloxycarbonyle, acrylate et alkylacrylate, ou choisis tels qu'au moins deux groupements $R_1$ et $R_3$, ou $R_2$ et $R_4$, sont reliés pour former un cycle à 5 ou 6 atomes de carbone.

Dans un mode préféré de mise en oeuvre de l'invention, le monomère A est une oléfine choisie parmi les alcènes et diènes comprenant de 2 à 10 atomes de carbone, de préférence parmi le butadiène, l'isoprène, le propène et l'isobutène.

Dans un deuxième mode préféré de mise en oeuvre, le monomère A est choisi parmi les halogènures d'alcènyle, de préférence le chlorure de vinyle, les acétates d'alcényle, de préférence l'acétate de vinyle, les dérivés acryliques, de préférence les acrylates et les méthacrylates d'alkyle, notamment l'acrylate et le méthacrylate de méthyle, le styrène et ses dérivés, et les hétérocycles comprenant au moins un hétéroatome d'oxygène, d'azote ou de soufre, de préférence le tétrahydrofurane, les époxydes et les cyclosiloxanes.

Parallèlement, les motifs PAC dans la formule (I) correspondent à des composés aromatiques polycycliques du groupe constitué par le pyrène, le phénanthrène, l'anthracène, les benzo-pyrènes, les benzo-anthracènes, le chrysène, le benzo-pérylène, le fluoranthène, les benzo-fluoranthènes, le naphtalène, l'acénaphtène, le fluorène, l'acénaphtylène et les dérivés des familles du dibenzothiophène et du carbazole.

Les mélanges selon l'invention comprennent également des hydrocarbures du groupe constitué par les hydrocarbures paraffiniques, naphténiques et/ou aromatiques, linéaires ou ramifiés, saturés ou insaturés, contenant éventuellement des hétéroatomes soufre, azote ou oxygène.

Un deuxième objet de l'invention est un procédé de préparation des mélanges hydrocarbonés contenant des PAC modifiés, caractérisé en ce qu'il comprend au moins une première étape qui consiste à ajouter au mélange hydrocarboné contenant des PAC non modifiés au moins 1% de monomère A, et éventuellement au moins 0,1% en poids d'un amorceur de polymérisation radicalaire et/ou ionique.

Dans le procédé selon l'invention, le monomère A est choisi de façon à ce que les PAC initiaux du mélange présentent une constante de transfert de préférence supérieure à 1 vis-à-vis du monomère A. La concentration en PAC initiaux étant généralement faible, le monomère A est choisi de préférence parmi ceux dont la constante de transfert vis-à-vis de ces PAC est la plus élevée possible, afin de limiter au maximum les quantités de monomère A ajouté.

De plus, quelle que soit la réaction de polymérisation utilisée, le choix des amorceurs dépend de la nature du monomère A utilisé.

Dans un premier mode de réalisation de ce procédé, lorsque la réaction de polymérisation est radicalaire, le monomère A est choisi parmi les monomères du groupe constitué par les halogènures d'alcènyle, de préférence le chlorure de vinyle, les acétates d'alcényle, de préférence l'acétate de vinyle, les acrylates et méthacrylates d'alkyle, de préférence le méthacrylate de méthyle, et le styrène et ses dérivés, et l'amorceur est choisi dans le groupe constitué

par les amorceurs azoïques et peroxydes, de préférence de l'azo-bis-isobutyronitrile, et le peroxyde de benzoyle.

Dans un second mode de réalisation du procédé selon l'invention, lorsque la réaction de polymérisation est ionique, de préférence cationique, le monomère A est choisi parmi les monomères du groupe constitué par les alcènes, les diènes, de préférence le butadiène, l'isoprène, le propène et l'isobutène, le styrène et ses dérivés, et les hétérocycles comprenant au moins un hétéroatome d'oxygène, d'azote
ou de soufre, de préférence le tétrahydrofurane, les époxydes et les cyclosiloxanes, et l'amorceur ionique est choisi de préférence parmi les amorceurs cationiques.

Dans ce mode de réalisation, l'amorceur cationique est choisi de préférence dans le groupe constitué par les acides de Lewis du groupe comprenant les halogènures d'aluminium, de titane, d'étain, et de bore, et les acides de Brônsted, de préférence l'acide perchlorique, l'acide sulfurique et l'acide triflique.

De façon tout à fait avantageuse, ces réactions de polymérisation dans le mélange hydrocarboné se font à une température à laquelle il n'y a pas de dégradation des PAC modifiés. Ainsi, non seulement, la réaction peut avoir lieu sous pression atmosphérique, à température ambiante ou plus élevée, mais aussi aux basses températures, par exemple à moins de 0°C pour les hydrocarbures à très bas point d'écoulement. De préférence, le domaine de températures de la réaction comprendra celles favorisant les réactions de transfert des centres actifs, radicaux ou ions, aux PAC présents dans le mélange. On ne sortirait pas du cadre de l'invention, en opérant à haute température et sous pression pour certains produits très visqueux.

Dans un mode de réalisation préféré de l'invention, on ajoute de 1 à 100% en poids de monomère A dans le mélange hydrocarboné contenant les PAC initiaux, et de 0,1 à 5% en poids d'un amorceur de polymérisation. Bien évidemment, sans sortir du cadre de l'invention, on pourrait augmenter les quantités de monomère A ayant réagi avec les PAC pour modifier les propriétés physico-chimiques du mélange hydrocarboné.

Lorsque après la première étape du procédé, le mélange hydrocarboné se sépare en deux phases non miscibles, le procédé selon l'invention comprend avantageusement au moins une deuxième étape de séparation par décantation, filtration, centrifugation ou encore distillation. On ne sortirait pas du cadre de la présente invention en répétant l'opération de séparation.

Un troisième objet de l'invention est l'utilisation du mélange contenant des PAC modifiés selon l'invention comme composant, en tout ou partie, de plastifiants, de produits bitumineux, de produits de craquage catalytique, de résidus atmosphériques, de résidus sous vide, des bases lubrifiantes et de combustibles, carburants ou fiouls.

En effet, contrairement aux enseignements de la technique antérieure, les hydrocarbures contenant les PAC modifiés selon l'invention peuvent être utilisés tels quels. Dans certains cas, ces PAC modifiés améliorent les propriétés physico-chimiques d'un produit, favorisent l'augmentation de leur viscosité et la diminution de leur teneur en PAC initiaux.

Dans la suite de la présente description, des exemples sont donnés pour illustrer l'invention sans toutefois vouloir en limiter la portée.

EXEMPLE I

Le présent exemple décrit un procédé de polymèrisation radicalaire selon l'invention appliqué à un extrait aromatique de distillat sous vide (ci- après « extrait ») constitué par une coupe pétrolière 350°C à 550°C contenant 100 ppm de PAC.

Pour modifier ces PAC, on opère à l'échelle du laboratoire dans un ballon de 100 m1 à deux tubulures muni d'un réfrigérant et d'une entrée de gaz inerte (de l'azote), équipé d'un agitateur et placé dans un bain d'huile thermostaté à 80°C pendant 6 heures. Plusieurs mélanges ont été testés et sont référencés dans le Tableau I comme des échantillons $X_1$ à $X_7$. Après réaction, l'excès de monomère a été évaporé sous vide.

TABLEAU I

| Echantillon | M(extrait) (g) | M(VA) (g) | AIBN/VA (*) | Masse (VA) polymérisée (g) |
|---|---|---|---|---|
| $X_1$ | 10 | 10 | $10^{-2}$ | 1,47 |
| $X_2$ | 10 | 10 | $4\times10^{-2}$ | 3,92 |
| $X_3$ | 10 | 10 | $5\times10^{-2}$ | 4,35 |
| $X_4$ | 10 | 10 | $6\times10^{-2}$ | 5,45 |
| $X_5$ | 5 | 10 | $6\times10^{-2}$ | 6,57 |
| $X_6$ | 15 | 10 | $6\times10^{-2}$ | 2,93 |

(suite)

| Echantillon | M(extrait) (g) | M(VA) (g) | AIBN/VA (*) | Masse (VA) polymérisée (g) |
|---|---|---|---|---|
| $X_7$ | 20 | 10 | $6\times10^{-2}$ | 1,61 |
| • AIBN = l'azo-bis-isobutyronitrile commercialisé par la société ALDRICH<br>• VA = acétate de vinyle commercialisé par la société ALDRICH<br>• (*) Rapport de concentrations | | | | |

Chaque échantillon ainsi préparé a été analysé par GC-MS (couplage chromatographie en phase gazeuse-spectrométrie de masse) pour mesurer la teneur en HAP (contenus dans les PAC) des échantillons $X_1$ à $X_7$ après polymérisation radicalaire.

Les résultats de ces analyses par rapport à la nature des HAP encore présents sont donnés dans le Tableau II ci-après.

TABLEAU II

| HAP | Toxicité | $X_1$ | $X_2$ | $X_3$ | $X_4$ | $X_5$ | $X_6$ | $X_7$ |
|---|---|---|---|---|---|---|---|---|
| Benzo(a)pyrène | +++ | 60,6 | 67 | 71 | 72 | 69 | 66,4 | 57,4 |
| Benzo(b)fluoranthène | ++ | 27,1 | 56 | 70,3 | 70,0 | 90,6 | 68 | 12,4 |
| Benzo(a)anthracène | + | 15,5 | - | 3,8 | 0,6 | 13,5 | 16,9 | 6,8 |
| Chrysène | + | 21,6 | 9,5 | 20,2 | 12,3 | 42,3 | 24,6 | 11,1 |
| Benzo(g,h,i)pérylène | +/- | 4 | 45,1 | 67,5 | 58,2 | 90,1 | 53,7 | 31,2 |
| Benzo(e)pyrène | +/- | - | 18,6 | 34,3 | 24 | 56,3 | 26,9 | 12,9 |

La toxicité des échantillons est en accord avec le dossier N°92/ 101 intitulé "Aromatic Extracts", page 7, du Concawe (The Oil Companies European Organization for Environmental and Health Protection).

On constate que les composés HAP les plus toxiques sont éliminés à plus de 50% en 6 heures et même à plus de 70% pour les échantillons $X_3$ à $X_5$. Lorsque l'on se reporte aux échantillons les moins toxiques (+/-), la réactivité à la polymérisation est beaucoup plus faible.

D'une manière générale, le pourcentage de HAP éliminés augmente lorsque la concentration en acétate de vinyle augmente (de $X_1$ à $X_5$) et lorsque la concentration en AIBN augmente (de $X_7$ à $X_5$).

Dans le milieu réactionnel constitué par l'extrait aromatique, l'amorçage de polymérisation de l'acétate de vinyle et la décroissance du pourcentage en HAP sont plus efficaces en présence d'AIBN (voir Tableau III ci-après pour le peroxyde de benzoyle).

TABLEAU III

| HAP | Toxicité | % |
|---|---|---|
| Benzo (a) pyrène | +++ | 9 |
| Benzo (b) fluoranthène | ++ | 26 |
| Benzo (a) anthracène | + | 54 |
| Chrysène | + | 19 |
| Benzo (g,h,i) pérylène | +/- | 25 |
| Benzo (e) pyrène | +/- | 1 |

EXEMPLE II

Le présent exemple vise à comparer l'efficacité des amorceurs de polymérisation radicalaire. Deux amorceurs de polymérisation ont été testés pour modifier les HAP initiaux de l'extrait aromatique de l'Exemple I en présence d'acétate de vinyle.

Pour le peroxyde de benzoyle $(C_6H_5CO)_2O_2$, on a opéré la polymérisation à 91°C pendant 6 heures, avec un rapport (peroxyde de dibenzoyle) / (VA) de 0,06.

Pour le tert-butylperoxy-benzoate ($C_6H_5CO_2OC(CH_3)_3$), on a opéré la polymérisation à 110°C pendant 6 heures, avec un rapport amorceur/VA de 0,06.

Les quantités d'extrait aromatique et de VA sont de 10 g chacun. La quantité de VA ayant réagi avec les HAP initiaux correspond à 0,13 g et 0,25 g respectivement pour le peroxyde de benzoyle et le tert-butylperoxy-benzoate.

En conclusion, comparés à ces rendements, ceux obtenus dans l'Exemple I en présence de AIBN comme amorceur de polymérisation sont plus élevés. Dans le milieu réactionnel constitué par l'extrait aromatique, l'amorçage de polymérisation de l'acétate de vinyle par l'AIBN est plus efficace.

EXEMPLE III

Cinq échantillons Yi ont été préparés en utilisant comme monomère du styrène, en remplacement du VA de l'Exemple 1, dans les mêmes conditions de température et de durée que dans cet Exemple I.

Les rapports massiques et les résultats des analyses par GC-MS pour l'échantillon Y 1 sont donnés dans les Tableaux IV et V ci-après.

Tableau IV

| Echantillon | M (extrait) (g) | M (styrène) (g) | (AIBN)/(Styrène) | M(Styrène polymérisé) (g) |
|---|---|---|---|---|
| Y1 | 10 | 5 | $5.10^{-2}$ | 3,14 |
| Y2 | 10 | 10 | $5.10^{-2}$ | 9,79 |
| Y3 | 30 | 10 | $5.10^{-2}$ | 9,42 |
| Y4 | 30 | 5 | 0,12 | 4,56 |
| Y5 | 20 | 1 | 0,6 | 0,59 |

Tableau V

| HAP | Toxicité | Y1 |
|---|---|---|
| Benzo (a) pyrène | +++ | nd |
| Benzo (b) fluoranthène | ++ | 23 |
| Benzo (a) anthracène | + | 43 |
| Chrysène | + | 23 |
| Benzo (g,h,i) pérylène | +/- | 21 |
| Benzo (e) pyrène | +/- | 3 |

La masse de styrène polymérisé est pratiquement quantitative. Cependant, l'abaissement du pourcentage de HAP est inférieur par rapport à l'acétate de vinyle. L'homopolymérisation est favorisée par rapport au transfert aux HAP.

EXEMPLE IV

Le présent exemple décrit l'utilisation d'un autre monomère, le butyl vinyl éther (BVE), en remplacement du VA dans les conditions de température et de durée de l'exemple I. Les quantités d'extrait aromatique sont de 10g pour 5g de BVE en présence d'AIBN tel que (AIBN)/(BVE) = $5\ 10^{-2}$. La quantité de BVE polymérisé est de 0,05g. Les résultats des analyses sont donnés dans le Tableau VI.

TABLEAU VI

| HAP | Toxicité | % |
|---|---|---|
| Benzo (a) pyrène | +++ | 83 |
| Benzo (b) fluoranthène | ++ | 25 |
| Benzo (a) anthracène | + | 61 |
| Chrysène | + | 40 |

(suite)

| HAP | Toxicité | % |
|---|---|---|
| Benzo (g,h,i) pérylène | +/- | 49 |
| Benzo (e) pyrène | +/- | 96 |

La masse polymérisée est très faible, mais le transfert aux HAP est important. L'abaissement du pourcentage en HAP est comparable à celui du VA.

EXEMPLE V

Le présent exemple décrit un procédé de polymèrisation cationique selon l'invention appliqué à un extrait aromatique de distillat sous vide de l'Exemple I contenant 100 ppm de HAP.

Pour modifier ces HAP, on opère à l'échelle du laboratoire dans un ballon tricol, équipé d'un réfrigérant et d'une entrée de gaz inerte. On introduit dans le ballon, B g d'extrait aromatique, C g de monomère (styrène) et D ml d'une solution contenant l'amorceur. Dans cet exemple, cette solution est constituée de 6,67 g de chlorure d'aluminium dans 50 ml de nitrobenzène.

Quatre essais ont été réalisés en faisant varier les concentrations des différents réactifs. Ces essais sont référencés $Z_1$ - $Z_4$ dans le Tableau VII ci-après.

TABLEAU VII

| | Z1 | Z2 | Z3 | Z4 |
|---|---|---|---|---|
| B (g) | 10 | 10 | 10 | 10 |
| C (g) | 0 | 2,7 | 4,5 | 9,1 |
| D (ml) | 1 | 1 | 1 | 1 |
| M (*) (g) | 0 | 0,8 | 0,9 | 7,6 |
| (*) M = Masse de styrène ayant réagi. | | | | |

Le rendement en polystyrène ne devient important que lorsque la quantité de monomère est équivalente à celle en extrait aromatique. Les analyses montrent que les meilleurs résultats sont obtenus pour Z3 et que c'est essentiellement le benzo (e) pyrène qui est éliminé (Tableau VIII).

TABLEAU VIII

| HAP | Toxicité | Z1 | Z2 | Z3 | Z4 |
|---|---|---|---|---|---|
| Benzo (a) pyrène | +++ | 13 | 0 | 24 | 7 |
| Benzo (b) fluoranthène | ++ | 19 | 0 | 46 | 8 |
| Benzo (a) anthracène | + | 50 | 65 | 44 | 0 |
| Chrysène | + | 6 | 0 | 2 | 28 |
| Benzo (g,h,i) pérylène | +/- | 16 | 8 | 18 | 0 |
| Benzo (e) pyrène | +/- | 87 | 85 | 92 | 86 |

EXEMPLE VI

Le présent exemple concerne la polymérisation d'acétate de vinyle sur les PAC contenus dans un fioul domestique ou FOD. On opère dans les conditions de l'Exemple I en utilisant de l'AIBN comme amorceur de polymérisation.

Les résultats sont donnés dans le Tableau IX ci-après.

TABLEAU IX

| Echantillon | M (FOD) (g) | M (VA) (g) | M (AIBN) (g) | (AIBN)/(VA) | NI(VA polymérisé) (g) |
|---|---|---|---|---|---|
| E1 | 10 | 10 | 0,12 | $5.10^{-3}$ | 0,93 |
| E2 | 10 | 10 | 0,76 | $4.10^{-2}$ | 7,16 |
| E3 | 10 | 10 | 1,14 | $6.10^{-2}$ | 6,78 |
| E4 | 30 | 10 | 0,96 | $5.10^{-2}$ | 3,11 |

Pour chaque essai, deux phases bien distinctes ont été obtenues : une phase liquide de même aspect que le FOD et une phase gel.

On sépare les phases par décantation et on observe le taux de disparition de PAC dans le premier liquide d'aspect semblable au FOD.

Les résultats sont donnés dans le Tableau X ci-après et concernent les deux HAP les plus toxiques rencontrés dans le FOD.

TABLEAU X

| HAP | Toxicité | E1 | E2 | E3 | E4 |
|---|---|---|---|---|---|
| Benzo (a) anthracène | + | 68 | 100 | 100 | 100 |
| Chrysène | + | 27 | 54 | 67 | 61 |

Dans le cas du FOD, on observe une disparition complète du benzo (a) anthracène et jusqu'à environ 70% du chrysène (expérience E3).

## Revendications

1. Mélange hydrocarboné comprenant des composés aromatiques polycycliques modifiés ou PAC modifiés, **caractérisé en ce que** ces PAC modifiés présentent une structure chimique de masse molaire moyenne comprise entre 150 et 10 000, cette structure chimique étant représentée par la formule (I) ci-après :

   $$(A)_x(PAC)_y \qquad (I)$$

   dans laquelle x et y sont des nombres entiers correspondant respectivement aux nombres de motifs A et PAC choisis tels que x/y est supérieur ou égal à 1, de préférence compris entre 1 et 50
   et dans laquelle le motif A représente un monomère polymérisable ou un mélange de monomères, comprenant entre 2 et 60 atomes de carbone.

2. Mélange selon la revendication 1, **caractérisé en ce** les PAC modifiés ont une masse molaire comprise entre 150 et 5000, et le rapport x/y varie de 1 à 20.

3. Mélange selon l'une des revendications 1 et 2, **caractérisé en ce que** le motif A correspond à un monomère A de formule (II) ci-après :

   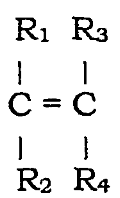

   (II)

   où $R_1$, $R_2$, $R_3$ et $R_4$ sont identiques ou différents, et choisis dans le groupe constitué par l'hydrogène, les groupes alkyle linéaires ou ramifiés, comprenant de 1 à 10 atomes de carbone, substitués ou non par des atomes d'halogène, des cycles aromatiques ou non et/ou des groupements acétate, alkyloxy carbonyle, acrylate et alkylacrylate, ou

choisis tels qu'au moins deux groupements $R_1$ et $R_3$, ou $R_2$ et $R_4$, sont reliés pour former un cycle à 5 ou 6 atomes de carbone.

4. Mélange selon l'une des revendications 1 à 3, **caractérisé en ce que** le monomère A correspond à une oléfine choisie parmi les alcènes et les diènes comprenant de 2 à 10 atomes de carbone, de préférence le butadiène, l'isoprène, le propène et l'isobutène.

5. Mélange selon l'une des revendications 1 à 4, **caractérisé en ce que** le monomère A correspond à un composé choisi parmi les halogènures d'alcényle, de préférence le chlorure de vinyle, les acétates d'alcènyle de préférence l'acétate de vinyle, les dérivés acryliques, de préférence les acrylates et méthacrylates d'alkyle, notamment l'acrylate et le méthacrylate de méthyle, le styrène et ses dérivés, de préférence le styrène, et les hétérocycles comprenant au moins un hétéroatome d'oxygène, d'azote ou de soufre, de préférence le tétrahydrofurane, les époxydes et les cyclosiloxanes.

6. Mélange selon l'une des revendications 1 à 5, **caractérisé en ce que** les motifs PAC correspondent à ceux des hydrocarbures aromatiques du groupe constitué par le pyrène, le phénanthrène, l'anthracène, les benzo-pyrènes, les benzo-anthracènes, le chrysène, le benzo-pérylène, le fluoranthène, les benzo-fluoranthènes, le naphtalène, l'acénaphtène, le fluorène et l'acénaphtylène, et les dérivés des familles du dibenzothiophène et du carbazole.

7. Mélange selon les revendications 1 à 6, **caractérisé en ce qu'**il comprend des hydrocarbures paraffiniques, naphtèniques et/ou aromatiques, linéaires ou ramifiés, saturés ou insaturés, contenant éventuellement des hétéroatomes de soufre, d'azote ou d'oxygène.

8. Procédé de préparation du mélange hydrocarboné selon l'une des revendications 1 à 7, **caractérisé en ce qu'**il comprend au moins une première étape qui consiste à ajouter à un mélange hydrocarboné contenant des PAC non modifiés au moins 1% de monomère A, et au moins 0,1% en poids d'un amorceur de polymérisation radicalaire et/ou ionique.

9. Procédé selon la revendication 8 **caractérisé en ce que**, lorsque la réaction de polymérisation est radicalaire, le monomère A est choisi parmi les monomères du groupe constitué par les halogènures d'alcényle, de préférence le chlorure de vinyle, les acétates d'alcènyle de préférence l'acétate de vinyle, les acrylates et méthacrylates d'alkyle, de préférence le méthacrylate de méthyle, le styrène et ses dérivés, et l'amorceur dans le groupe constitué par les amorceurs azoïques et les peroxydes, de préférence l'azo-bis-isobutyronitrile, ou le peroxyde de benzoyle.

10. Procédé selon la revendication 8 **caractérisé en ce que**, lorsque la réaction de polymérisation est ionique, de préférence cationique, A est choisi parmi les monomères du groupe constitué par les alcènes et les diènes, de préférence le butadiène, l'isoprène, le propène et l'isobutène, le styrène et ses dérivés, et les hétérocycles comprenant au moins un hétéroatome d'oxygène, d'azote ou de soufre, de préférence le tétrahydrofurane, les époxydes et les cyclosiloxanes, et l'amorceur est ionique, de préférence cationique.

11. Procédé selon la revendication 10, **caractérisé en ce que** l'amorceur cationique est choisi parmi les acides de Lewis du groupe constitué par les halogènures d'aluminium, de titane, d'étain, et de bore, et les acides de Brönsted, de préférence l'acide perchlorique, l'acide sulfurique et l'acide triflique.

12. Procédé selon l'une des revendications 8 à 11, **caractérisé en ce que** la réaction de polymérisation est conduite à une température inférieure à la température de dégradation des PAC modifiés.

13. Procédé selon l'une des revendications 8 à 12, **caractérisé en ce qu'**on ajoute de 1 à 100% en poids de monomère A dans le mélange hydrocarboné contenant des PAC initiaux et de 0,1 à 5% en poids d'un amorceur de polymérisation.

14. Procédé selon l'une des revendications 8 à 13, **caractérisé en ce qu'**il comprend une seconde étape de séparation par décantation, centrifugation ou distillation, lorsque, à l'issue de la première étape, le mélange obtenu présente deux phases distinctes.

15. Utilisation du mélange hydrocarboné selon les revendications 1 à 7 dans la composition de plastifiants, de produits bitumineux, de produits résultant du craquage catalytique de résidus atmosphériques, de résidus sous vide, de bases lubrifiantes et de combustibles, carburants ou fiouls.

**Claims**

1. A hydrocarbon mixture comprising modified polycyclic aromatic compounds or modified PACs, **characterised in that** these modified PACs have a chemical structure of a mean molar mass of between 150 and 10 000, this chemical structure being represented by the formula (I) below:

$$(A)_x(PAC)_y \qquad (I)$$

in which x and y are integers respectively corresponding to the number of A and PAC structural units selected such that x/y is greater than or equal to 1, preferably between 1 and 50
and in which the structural unit A represents a polymerisable monomer or a mixture of monomers comprising between 2 and 60 carbon atoms.

2. A mixture according to claim 1, **characterised in that** the modified PACs have a molar mass of between 150 and 5000, and the ratio x/y varies from 1 to 20.

3. A mixture according to either of claims 1 and 2, **characterised in that** the structural unit A corresponds to a monomer A of the formula (II) below:

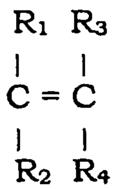
(II)

in which $R_1$, $R_2$, $R_3$ and $R_4$ are identical or different and are selected from among the group made up of hydrogen, linear or branched alkyl groups comprising from 1 to 10 carbon atoms, substituted or unsubstituted by halogen atoms, aromatic or non-aromatic rings and/or acetate, alkyloxycarbonyl, acrylate and alkyl acrylate groups, or selected such that at least two groups $R_1$ and $R_3$, or $R_2$ and $R_4$, are joined to form a ring having 5 or 6 carbon atoms.

4. A mixture according to any one of claims 1 to 3, **characterised in that** the monomer A corresponds to an olefin selected from among alkenes and dienes comprising from 2 to 10 carbon atoms, preferably butadiene, isoprene, propene and isobutene.

5. A mixture according to any one of claims 1 to 4, **characterised in that** the monomer A corresponds to a compound selected from among alkenyl halides, preferably vinyl chloride, alkenyl acetates, preferably vinyl acetate, acrylic derivatives, preferably alkyl acrylates and methacrylates, in particular methyl acrylate and methacrylate, styrene and the derivatives thereof, preferably styrene, and heterocyclic compounds comprising at least one oxygen, nitrogen or sulfur heteroatom, preferably tetrahydrofuran, epoxides and cyclosiloxanes.

6. A mixture according to any one of claims 1 to 5, **characterised in that** the PAC structural units correspond to those of the aromatic hydrocarbons of the group made up of pyrene, phenanthrene, anthracene, benzopyrenes, benzoanthracenes, chrysene, benzoperylene, fluoranthene, benzofluoranthenes, naphthalene, acenaphthene, fluorene and acenaphtylene and derivatives of the dibenzothiophene and carbazole families.

7. A mixture according to claims 1 to 6, **characterised in that** it comprises paraffinic, naphthenic and/or aromatic, linear or branched, saturated or unsaturated, hydrocarbons optionally containing sulfur, nitrogen or oxygen heteroatoms.

8. A method of preparing the hydrocarbon mixture according to any one of claims 1 to 7, **characterised in that** it comprises at least one first step which involves adding at least 1% of monomer A and at least 0.1% by weight of a free-radical and/or ionic polymerisation initiator to a hydrocarbon mixture containing unmodified PACs.

9. A method according to claim 8, **characterised in that**, when the polymerisation reaction is a free-radical reaction, the monomer A is selected from among the monomers of the group made up of alkenyl halides, preferably vinyl chloride, alkenyl acetates, preferably vinyl acetate, alkyl acrylates and methacrylates, preferably methyl methacrylate, styrene and the derivatives thereof, and the initiator from the group made up of azo and peroxide initiators, preferably azobisisobutyronitrile or benzoyl peroxide.

10. A method according to claim 8 **characterised in that**, when the polymerisation reaction is an ionic, preferably cationic, reaction, A is selected from among the monomers of the group made up of alkenes and dienes, preferably butadiene, isoprene, propene and isobutene, styrene and the derivatives thereof, and heterocyclic compounds comprising at least one oxygen, nitrogen or sulfur heteroatom, preferably tetrahydrofuran, epoxides and cyclosiloxanes, and the initiator is ionic, preferably cationic.

11. A method according to claim 10, **characterised in that** the cationic initiator is selected from among Lewis acids of the group made up of aluminium, titanium, tin and boron halides, and Brönsted acids, preferably perchloric acid, sulfuric acid and triflic acid.

12. A method according to any one of claims 8 to 11, **characterised in that** the polymerisation reaction is carried out at a temperature below the degradation temperature of the modified PACs.

13. A method according to any one of claims 8 to 12, **characterised in that** from 1 to 100% by weight of monomer A and from 0.1 to 5% by weight of a polymerisation initiator are added to the hydrocarbon mixture containing the initial PACs.

14. A method according to any one of claims 8 to 13, **characterised in that** it comprises a second step of separation by settling, centrifugation or distillation, when, on completion of the first step, the mixture obtained exhibits two distinct phases.

15. Use of the hydrocarbon mixture according to claims 1 to 7 in the composition of plasticisers, bitumen products, products arising from the catalytic cracking of atmospheric residues, vacuum residues, lubricant and fuel bases, motor fuels or fuel oils.

## Patentansprüche

1. Kohlenwasserstoffmischung, die modifizierte polycyclische aromatische Verbindungen oder modifizierte PACs umfasst,
**dadurch gekennzeichnet, dass** diese modifizierten PACs eine chemische Struktur mit einer mittleren Molekülmasse von zwischen einschließlich 150 und 10.000 aufweisen, wobei diese chemische Struktur durch die nachstehende Formel (I) dargestellt wird:

$$(A)_x(PAC)_y \qquad (I)$$

in welcher x und y ganze Zahlen sind, die der jeweiligen Anzahl an A- und PAC-Einheiten entsprechen, so ausgewählt, dass x/y größer oder gleich 1, vorzugsweise zwischen einschließlich 1 und 50, ist,
und in welcher die Einheit A ein polymerisierbares Monomer oder eine Mischung aus Monomeren darstellt, die zwischen 2 und 60 Kohlenstoffatome enthält.

2. Mischung gemäß dem Anspruch 1, **dadurch gekennzeichnet, dass** die modifizierten PACs eine Molekülmasse von zwischen einschließlich 150 und 5000 haben, und das Verhältnis x/y von 1 bis 20 reicht.

3. Mischung gemäß einem der Ansprüche 1 und 2, **dadurch gekennzeichnet, dass** die Einheit A einem Monomer A der nachstehenden Formel (II) entspricht:

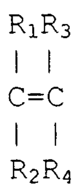

(II)

worin $R_1$, $R_2$, $R_3$ und $R_4$ gleich oder verschieden sind und aus der Gruppe, die aus Wasserstoff, den 1 bis 10 Kohlenstoffatome enthaltenden Gruppen linearer oder verzweigter Alkyle, die nicht substituiert sind oder die mit Halogenatomen, aromatischen oder nicht-aromatischen Ringen und/oder Acetat-, Alkoxycarbonyl-, Acrylat- und Alkylacrylatgruppen substituiert sind, besteht, ausgewählt sind, oder die so ausgewählt sind, dass mindestens 2 Gruppierungen $R_1$ und $R_3$ oder $R_2$ und $R_4$ zum Bilden eines Rings mit 5 oder 6 Kohlenstoffatomen verbunden sind.

**4.** Mischung gemäß einem der Ansprüche 1 bis 3, **dadurch gekennzeichnet, dass** das Monomer A einem Olefin entspricht, das aus Alkenen und Dienen, die 2 bis 10 Kohlenstoffatome enthalten, vorzugsweise Butadien, Isopren, Propen und Isobuten, ausgewählt ist.

**5.** Mischung gemäß einem der Ansprüche 1 bis 4, **dadurch gekennzeichnet, dass** das Monomer A einer Verbindung entspricht, die aus den halogenierten Alkenylen, vorzugsweise Vinylchlorid, Acetaten von Alkenylen, vorzugsweise Vinylacetat, Acrylderivaten, vorzugsweise Alkylacrylat und -methacrylat, besonders Methylacrylat und -methacrylat, Styrol und seinen Derivaten, vorzugsweise Styrol, und Heterozyklen, die mindestens ein Sauerstoff-, Stickstoff- oder Schwefelheteroatom umfassen, vorzugsweise Tetrahydrofuran, Epoxiden und Cyclosiloxanen ausgewählt ist.

**6.** Mischung gemäß einem der Ansprüche 1 bis 5, **dadurch gekennzeichnet, dass** die PAC-Einheiten derjenigen Gruppe aromatischer Kohlenwasserstoffe entsprechen, die aus Pyren, Phenanthren, Anthracen, Benzopyren, Benzoanthrazen, Chrysen, Benzoperylen, Fluoranthen, Benzofluoranthen, Naphthalin, Acenaphthen, Fluoren und Acenaphthylen, und Derivaten der Dibenzothiophen- und Carbazolfamilie besteht.

**7.** Mischung gemäß den Ansprüchen 1 bis 6, **dadurch gekennzeichnet, dass** sie paraffinische, naphthenische und/oder aromatische, lineare oder verzweigte, gesättigte oder ungesättigte Kohlenwasserstoffe umfasst, die gegebenenfalls Schwefel-, Stickstoff- oder Sauerstoffheteroatome enthalten.

**8.** Verfahren zum Herstellen einer Kohlenwasserstoffmischung gemäß einem der Ansprüche 1 bis 7, **dadurch gekennzeichnet, dass** es mindestens einen ersten Schritt umfasst, der aus der Zugabe von mindestens 1% des Monomers A und mindestens 0,1 Gew.-% eines radikalischen und/oder ionischen Polymerisationsinitiators zu einer aus nicht modifizierten PACs enthaltenden Kohlewasserstoffmischung besteht.

**9.** Verfahren gemäß Anspruch 8, **dadurch gekennzeichnet, dass**, wenn die Polymerisation radikalisch ist, das Monomer A aus den Monomeren aus der Gruppe ausgewählt ist, die aus halogenierten Alkylenen, vorzugsweise Vinylchlorid, Alkenylacetaten, vorzugsweise Vinylacetat, Alkylacrylaten und -methacrylaten, vorzugsweise Methylmethacrylat, Styrol und seinen Derivaten, besteht, und die Initiatoren aus der Gruppe, die aus Azo- und Peroxoinitiatoren, vorzugsweise Azoisobutyronitril oder Benzoylperoxid, besteht.

**10.** Verfahren gemäß Anspruch 8, **dadurch gekennzeichnet, dass**, wenn die Polymerisation ionisch, vorzugsweise kationisch, ist, A aus den Monomeren der Gruppe ausgewählt ist, die aus Alkenen und Dienen, vorzugsweise Butadien, Isopren, Propen und Isobuten, Styrol und seinen Derivaten, und Hetereozyklen, die mindestens ein Sauerstoff-, Stickstoff- oder Schwefelheteroatom umfassen, vorzugsweise Tetrahydrofuran, Epoxiden und Cyclosiloxanen besteht, und der Initiator ionisch, vorzugsweise kationisch, ist.

**11.** Verfahren gemäß Anspruch 10, **dadurch gekennzeichnet, dass** der kationische Initiator aus Lewissäuren der Gruppe, die aus Aluminium-, Titan- , Zinn- und Borhalogeniden besteht, und Brønstedsäuren, vorzugsweise Perchlorsäure, Schwefelsäure und Trifluormethansulfonsäure, ausgewählt ist.

**12.** Verfahren gemäß einem der Ansprüche 8 bis 11, **dadurch gekennzeichnet, dass** die Polymerisationsreaktion bei einer Temperatur geführt wird, die geringer als die Zersetzungstemperatur der modifizierten PACs ist.

**13.** Verfahren gemäß einem der Ansprüche 8 bis 12, **dadurch gekennzeichnet, dass** man 1 bis 100 Gew.-% des Monomers A zur Kohlenwasserstoffmischung zugibt, die die ursprünglichen PACs und 0,1 bis 5 Gew.-% eines Polymersationsinitiators enthält.

**14.** Verfahren gemäß einem der Ansprüche 8 bis 13, **dadurch gekennzeichnet, dass** es einen zweiten Schritt der Abtrennung durch Dekantieren, Zentrifugieren oder Destillieren umfasst, wenn die vom ersten Schritt stammende erhaltene Mischung zwei unterschiedliche Phasen aufweist.

**15.** Verwendung einer Kohlenwasserstoffmischung gemäß den Ansprüchen 1 bis 7 in einer Zusammensetzung von

Weichmachern, von Bitumenprodukten, von Produkten des katalytischen Crackens von atmosphärischen Resten und Resten unter Vakuum, von Basis-Schmiermitteln und von Verbrennungsstoffen, Kraftstoffen oder Heizölen.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- DE 4138561
- JP 05271117 B


### Littérature non-brevet citée dans la description


- **JANUSZ ZIELINSKY.** *Polymery-Tworzywa wielkoczasteczlowe,* 1995, vol. 40 (10), 591
- *J. Am. Chem. Soc., Div. Fuel Chem.,* 1995, vol. 40 (4), 768-770
- **J.L.IHRIG ; S. PAL SOOD.** *Journal of polymer science,* 1965, vol. 3, 1573-1586